# EUROPÄISCHE PATENTSCHRIFT

(11) **EP 0 686 938 B1**
(45) Veröffentlichungstag und Bekanntmachung des Hinweises auf die Patenterteilung: **13.03.2002**
(21) Anmeldenummer: 95107791.6
(22) Anmeldetag: 22.05.1995
(51) Int. Cl.: G06K 19/08

(54) **Verfahren zur Speicherung und Aufbereitung von mit unterschiedlicher Periode anfallenden Daten**
Storing and processing of data occurring within different periods
Procédé de mise en mémoire et de traitement de données se produisant pendant des périodes différentes

(30) Priorität: 03.06.1994 DE 4419576
(43) Veröffentlichungstag der Anmeldung: 13.12.1995
(73) Patentinhaber: BAYER AG, 51368 Leverkusen (DE)
(72) Erfinder: Hartmann, Georg, Dr., D-51061 Köln (DE); Weikert, Gunnar, Dr., D-40589 Düsseldorf (DE)

(56) Entgegenhaltungen:
- EP-A- 0 528 275
- US-A- 5 317 138
- COMEAU,L.W.: IBM TECHNICAL DISCLOSURE BULLETIN, Bd. 19, Nr. 12, Mai 1977, USA, Seiten 4800-4801, XP002061676

## Beschreibung

Die vorliegende Erfindung betrifft ein Verfahren zur Speicherung und Aufbereitung von einerseits mit kurzer Periode anfallenden alphanumerischen Daten und andererseits mit langer Periode anfallendem Bildmaterial unter Einsatz einer persönlichen Karte als Speichermedium.

Bei der Langzeitbeobachtung von Abläufen fallen häufig einerseits Daten an, die mit kurzer Periode, z.B. mehrmals täglich, abgegriffen werden, und andererseits mit größerem Zeitabstand erzeugtes Bildmaterial zur Beurteilung von Langzeit-Veränderungen, wobei eine Beziehung zwischen den mit kurzer Periode ermittelten alphanumerischen Daten und den Langzeit-Veränderungen besteht bzw. hergeleitet werden soll.

Solche Langzeitbeobachtungen können sich z.B. auf Patienten mit chronischen Erkrankungen beziehen. Dabei können einerseits Daten anfallen, die der Patient ohne Mitwirkung des Arztes in kurzen Zeitabständen in Form alphanumerischer Daten selbst ermittelt und die bei den in größerem Zeitabstand durchgeführten ärztlichen Untersuchungen zur Verfügung stehen sollen, da sie wichtige Hinweise für die weitere Therapie eventuell vom Arzt festgestellter Langzeit-Veränderungen liefern. Die Langzeitbeobachtung durch den Arzt aufgrund von Untersuchungen in größerem Zeitabstand, z.B. unter Einbeziehung von fotografisch durchgeführten Vergleichsuntersuchungen, kann durch die Bereitstellung der vom Patienten selbst ermittelten Kurzzeitbeobachtungen ergänzt werden und zu einer erhöhten Wirksamkeit der Therapie beitragen.

Die Langzeitbeobachtung des Diabetikers durch den Arzt besteht z.B. unter anderem in halbjährlichen Vergleichsuntersuchungen des Augenhintergrundes, wobei jeweils fotografische Aufnahmen des Augenhintergrundes angefertigt und verglichen werden. Der Patient andererseits ermittelt unter anderem mehrmals täglich seinen Blutzuckerspiegel. Die Auswertung kurzzeitiger Schwankungen des Blutzuckerspiegels kann dem Arzt wichtige Hinweise im Zusammenhang mit Veränderungen des Augenhintergrundes geben.

Für eine wirksame Langzeit-Therapie ist es demnach wünschenswert, sowohl die vom Patienten durchgeführten Beobachtungen mit kurzer Periode als auch die mit längerer Periode durchgeführten Vergleichsuntersuchungen jeweils verfügbar zu haben. Im Interesse der Mobilität der Patienten wäre es ferner wünschenswert, daß der Patient die für eine aussagekräftige Anamnese erforderlichen Daten bei sich führen kann.

Als Speichermedium für gesundheitsrelevante Daten wurde daher bereits mehrfach vorgeschlagen, optische Speicherkarten im Kreditkartenformat, die mittels Laserstrahlen beschrieben und gelesen werden können ("WORM" = Write Once Read Many Memory), einzusetzen. Solche optischen Speicherkarten haben aufgrund der technischen Entwicklung in den vergangenen Jahren Speicherkapazitäten von mehreren Megabytes, insbesondere 4 bis 6 Megabyte erzielt. Die entsprechenden Schreib/Lese-Geräte für solche optischen Speicherkarten sind jedoch nicht geeignet, von dem Patienten mitgeführt zu werden.

Aus US 5,317,138 ist eine Hybridkarte bekannt, welche einen Speicher-IC und einen optischen Speicherbereich und gegebenenfalls einen magnetischen Speicherbereich aufweist. Weiterhin ist ein Schreib-/Lesegerät offenbart, das es erlaubt beide Speicherbereiche unabhängig von einander gleichzeitig oder nacheinander zu bearbeiten. Dazu wird die Hybridkarte auf einem Schlitten befestigt, um sie optisch zu lesen und zu schreiben. Unabhängig von der Schlittenpositition wird der Speicher-IC kontaktiert.

In EP 528 275 A2 wird eine Hybridkarte enthaltend einen IC-Chip und ein IC-Terminal sowie einen optisch magnetischen Speicherbereich offenbart. Weiterhin ist ein Schreib-/Lesegerät zu der Hybridkarte offenbart.

Aus IBM, Technical Disclosure Bulletin, Vol. 19, No. 12, May 1977, S. 4800-4801 ist eine Karte zur Speicherung der Krankengeschichte eines Patienten bekannt. Die Karte enthält eine Fotographie des Inhabers, eine Identifikation des Inhabers und weitere Notfallinformationen, sowie einen digital-lesbaren Magnetstreifen auf ihrer Vorderseite. Daten zur Diagnostik und Therapie des Patienten sind auf der Rückseite der Karte in einem elektro-optischen Speicher gespeichert.

Erfindungsgemäß wird daher vorgeschlagen, Datenspeicher im Kreditkartenformat einzusetzen, die einen ersten Speicher zur optischen Datenspeicherung und einen zweiten Speicher in Form eines elektronischen Chips aufweisen. Für das Beschreiben des elektronischen Chips stehen Geräte mit den Abmessungen eines Taschenrechners zur Verfügung, die ohne weiteres vom Patienten mitgeführt werden können. Das Schreibgerät für den Chip kann ferner mit einem Gerät zur Bestimmung des Blutzuckers kombiniert sein, so daß die tägliche Blutzuckermessung des Patienten direkt in den Chip der Speicherkarte eingeschrieben wird. Im Rahmen der z.B. halbjährlichen Untersuchungen durch den Arzt wird dieser die gespeicherten Blutzuckerwerte abrufen, gegebenenfalls aufarbeiten, so daß diese in Form eines Diagramms mit einer Zeitachse lesbar sind, und gemeinsam mit dem Augenhintergrundbild in den optischen Speicherbereich übertragen. Der Chip-Speicher steht dann erneut für die Aufnahme von Blutzuckerwerten zur Verfügung.

Gegenstand der vorliegenden Erfindung ist demgemäß ein Verfahren zur Speicherung und Aufbereitung von mit kurzer Periode anfallenden alphanumerischen Daten und mit langer Periode anfallendem Bildmaterial auf einer Datenträgerkarte enthaltend einen ersten Speicher in Form eines elektronischen Speicherchips und einen zweiten Speicher in Form eines optischen Speicherbereichs, das dadurch gekennzeichnet ist, dass die alphanumerischen Daten mit kurzer Periode durch ein alphanumerisches Schreibgerät auf den ersten Speicher gespeichert werden, das Bildmaterial mittels eines optischen Schreib/Lese-Gerätes in den zweiten Speicher derselben Datenträgerkarte gespeichert wird, wobei in zeitlichem Zusammenhang mit der Speicherung von Bildmaterial jeweils der Chip gelesen und die gelesenen Daten auf den optischen Speicherbereich übertragen werden.

Gegebenenfalls werden die gelesenen Daten verarbeitet bevor sie auf den optischen Speicherbereich übertragen werden.

Gegenstand der vorliegenden Erfindung ist auch die Einheit gemäß Anspruch 3.

Das erfindungsgemäße Verfahren und die erfindungsgemäße Einheit sind überall da geeignet, wo vorzugsweise mobil alphanumerische Daten gesammelt werden müssen, die im Zusammenhang mit fotografischen Vergieichsaufnahmen, die in größerem Zeitabstand erstellt werden, ausgewertet werden. Solche Datenstrukturen fallen nicht nur bei chronischen Erkrankungen an, sondern auch im Zusammenhang mit gefährdeten Arbeitsplätzen, wenn z.B. innerhalb kurzer Perioden MAK-Werte gemessen und gespeichert werden und in größeren Zeitabständen umfangreichere gesundheitliche Vorsorge- bzw. Überwachungsuntersuchungen unter Einschluss von z.B. Röntgenaufnahmen durchgeführt werden.

Ferner kann das erfindungsgemäße Verfahren und die erfindungsgemäße Einheit in Zusammenhang mit der Erprobung von Arzneimitteln, sowohl im Tier- als auch im Human-Versuch, vorteilhaft sein. Aber auch bei der Beobachtung von Bauwerken oder Fahrzeugen, allgemein im Zusammenhang mit der Überwachung von Materialermüdungen kann es zweckmäßig sein, dem Beobachtungsgegenstand jeweils eine "persönliche" Karte zuzuordnen, wo einerseits in kurzem Abstand alphanumerische Daten, z.B. Schwingungsverhalten, Belastungswerte und ähnliches, registriert werden und andererseits in größeren Abständen z.B. Röntgenaufnahmen von Schweißnähten in Form von Bildinformationsmaterial erzeugt werden.

Der Chip der Datenspeicherkarte kann dabei zusätzlich Informationen zur Identifizierung des Beobachtungsgegenstandes bzw. des Patienten enthalten. Andererseits ist es auch möglich, die Datenspeicherkarte mit mehreren Chips zu versehen, wobei einer der Chips für die Speicherung solcher Identifizierungsdaten vorgesehen ist. Eine weitere Möglichkeit besteht darin, die Datenspeicherkarte mit einem zusätzlichen Magnetstreifen für die Aufnahme der Daten zur Identifizierung des Beobachtungsgegenstandes bzw. Patienten zu versehen.

Das erfindungsgemäße Verfahren und die erfindungsgemäße Einheit sind insbesondere dann von Vorteil, wenn ortsungebunden und unabhängig von Energieversorgung mit kurzer Periode alphanumerische Daten generiert und gespeichert werden sollen, die dann in längerperiodischen Abständen gegebenenfalls nach Auswertung z.B. mittels elektronischer Datenverarbeitungssysteme im Zusammenhang mit der Generierung von vergleichendem Bildmaterial für weitere spätere Auswertungen zur Verfügung gestellt werden sollen. Hierbei wird einerseits die begrenzte Speicherkapazität des Chips, die bei etwa 5 KB liegt, in Kombination mit der hohen Speicherkapazität einer optischen Speicherkarte genutzt. Dabei ist die Kompatibilität der Datenspeicherkarte einerseits mit einem mobilen, geringvolumigen und leichtgewichtigen, batteriebetriebenen Schreibgerät für die Chip-Speicherung und andererseits mit einem im wesentlichen ortsfesten Chip-Lese-, Datenverarbeitungs- und Schreib/Lese-Gerät für optische Datenspeicher erfindungsgemäß erforderlich.

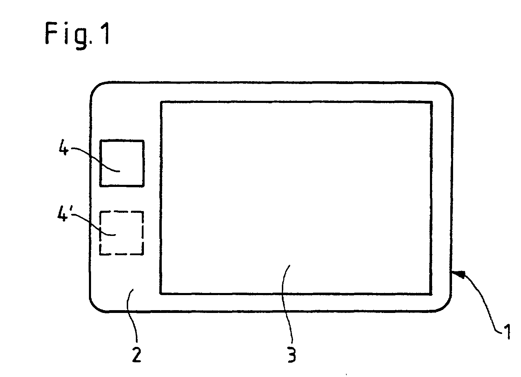

Die erfindungsgemäß einzusetzende Datenspeicherkarte ist in der beigefügten Figur 1 dargestellt. Die Datenspeicherkarte 1 enthält in einem Rahmen 2 ein optisches Datenspeicherfeld 3 sowie den Chip 4, wobei gegebenenfalls ein zweiter Chip 4' vorgesehen sein kann.

## Patentansprüche

1. Verfahren zur Speicherung und Aufbereitung von mit kurzer Periode anfallenden alphanumerischen Daten und mit langer Periode anfallendem Bildmaterial auf einer Datenträgerkarte enthaltend einen ersten Speicher in Form eines elektronischen Speicherchips und einen zweiten Speicher in Form eines optischen Speicherbereichs, **dadurch gekennzeichnet, daß** die alphanumerischen Daten mit kurzer Periode durch ein alphanumerisches Schreibgerät auf dem ersten Speicher gespeichert werden, das Bildmaterial mittels eines optischen Schreib/Lese-Gerätes auf dem zweiten Speicher der selben Datenträgerkarte gespeichert wird, wobei in zeitlichem Zusammenhang mit der Speicherung von Bildmaterial jeweils der Chip gelesen und die gelesenen Daten auf den optischen Speicherbereich übertragen werden.

2. Verfahren gemäß Anspruch 1, **dadurch gekennzeichnet, daß** die von dem Chip gelesenen Daten vor Übertragung auf den optischen Speicherbereich verarbeitet werden.

3. Einheit zur Durchführung des Verfahrens nach Anspruch 1, bestehend aus einer Datenspeicherkarte, enthaltend mindestens einen ersten optischen Speicher und einen zweiten elektronischen Chip-Speicher, einem Schreibgerät zum Beschreiben des Chipspeichers und einem Gerät zum Lesen des Chipspeichers zur Umsetzung der gelesenen Chip-Daten in optisch schreibbare Daten und zum Beschreiben des optischen Datenspeichers.

## Claims

1. Method of storing and preparing alphanumeric data occurring at short periodic intervals and image material occurring at long periodic intervals on a data carrier card containing a first memory in the form of an electronic memory chip and a second memory in the form of an optical memory area, **characterized in that** the alphanumeric data are stored at short periodic intervals by an alphanumeric writing device on the first memory, the image material is stored by means of an optical reading/writing device on the second memory of the same data carrier card, the storage of image material being accompanied at a related time in each case by the chip being read and the read data being transferred to the optical memory area.

2. Method according to Claim 1, **characterized in that** the data read by the chip are processed before being transferred to the optical memory area.

3. Unit for carrying out the method according to Claim 1 comprising a data memory card, containing at least a first optical memory and a second electronic chip memory, a writing device for writing to the chip memory and a device for reading from the chip memory, for conversion of the read chip data into optically writable data and for writing to the optical data memory.

## Revendications

1. Procédé pour la mise en mémoire et le traitement de données alphanumériques saisies à périodicité courte et de matériaux d'images saisis à périodicité plus longue sur une carte de support de données contenant une première mémoire sous la forme d'une puce électronique de mémoire et une deuxième mémoire sous la forme d'une zone optique de mémoire, **caractérisé en ce que** les données alphanumériques sont mises en mémoire à périodicité courte dans la première mémoire par un appareil d'écriture alphanumérique, **en ce que** le matériau d'image est mis en mémoire sur la deuxième mémoire de la même carte de support de données au moyen d'un appareil d'écriture/lecture optique, la puce étant lue et les données lues étant transférées sur la zone de mémoire optique en association temporelle avec la mise en mémoire du matériau d'image.

2. Procédé selon la revendication 1, **caractérisé en ce que** les données lues sur la puce sont traitées avant leur transfert dans la zone de mémoire optique.

3. Entité en vue de la mise en oeuvre du procédé selon la revendication 1, constituée d'une carte de mémoire de données contenant au moins une première mémoire optique et une deuxième mémoire à puce électronique, un appareil d'écriture pour l'écriture dans la mémoire à puce et un appareil pour lire la mémoire à puce en vue de la conversion des données lues sur la puce en données aptes à être écrites optiquement, et pour écrire dans la mémoire optique de données.
